# EUROPÄISCHE PATENTANMELDUNG

(11) **EP 3 971 412 A1**
(43) Veröffentlichungstag der Anmeldung: **23.03.2022**
(21) Anmeldenummer: 21197864.8
(22) Anmeldetag: 21.09.2021
(51) Int. Cl.: F03D 3/04, F03B 17/06, F03D 3/06

(54) **VORRICHTUNG ZUR ERZEUGUNG ELEKTRISCHER ENERGIE**

(30) Priorität: 22.09.2020 DE 102020124612
(71) Anmelder: NRGSync Holding GmbH, 71126 Gäufelden (DE)
(72) Erfinder: Lange, Thomas, 44137 Dortmund (DE); Kraus, Stefan Marian, 71126 Gäufelden (DE); Mex, Mikail-Philipp, 44139 Dortmund (DE)
(74) Vertreter: Schäperklaus, Jochen

(57) **Zusammenfassung**

Die Erfindung betrifft eine Vorrichtung zur Erzeugung elektrischer Energie, umfassend ein Gehäuse (100), einen elektrischen Generator und einen Rotor (300), wobei der Rotor (300) innerhalb des Gehäuses (100) angeordnet ist, wobei der Rotor (300) mechanisch mit dem Generator gekoppelt ist, sodass Rotationsenergie vom Rotor (300) zum Generator übertragbar ist, wobei der Generator dazu ausgebildet ist, die Rotationsenergie in elektrische Energie umzuwandeln, wobei das Gehäuse (100) eine erste Seitenwand (200), eine zweite Seitenwand (103), eine vordere Öffnung (101) und eine hintere Öffnung (102) aufweist, wobei die vordere Öffnung (101) zwischen den Seitenwänden (200; 103) angeordnet ist, wobei die hintere Öffnung (102) zwischen den Seitenwänden (200; 103) angeordnet ist, wobei zwischen den Seitenwänden (200; 103) und den Öffnungen (101; 102) ein Innenraum angeordnet ist, wobei der Rotor (300) durch ein von der vorderen Öffnung (101) zur hinteren Öffnung (102) durch das Gehäuse (100) strömendes Fluid in Rotation versetzbar ist, wobei das Gehäuse (100) ein Fluidabweisungsmittel (104) umfasst, das an der ersten Seitenwand (200) angeordnet ist und in den Innenraum hineinragt.

## Beschreibung

Die vorliegende Erfindung betrifft eine Vorrichtung zur Erzeugung elektrischer Energie gemäß dem Oberbegriff des Anspruchs 1.

EP 2 927 476 A1 offenbart eine Vorrichtung zur Erzeugung elektrischer Energie mit einem Rotor, der von einer Fluidströmung in Rotation um eine vertikale Rotationsachse versetzt wird. Der Rotor kann beispielsweise durch eine Windströmung in Rotation versetzt werden. Die Rotationsenergie wird von einem Generator in elektrische Energie umgewandelt.

Demgegenüber liegt der vorliegenden Erfindung die Aufgabe zugrunde, eine effizientere Vorrichtung zur Erzeugung elektrischer Energie zu schaffen.

Diese Aufgabe wird durch eine Vorrichtung gemäß Anspruch 1 gelöst. Ausführungsformen der Erfindung sind in den abhängigen Ansprüchen angegeben.

Die Vorrichtung umfasst ein Gehäuse, einen elektrischen Generator und einen Rotor. Der Rotor ist innerhalb des Gehäuses angeordnet und mechanisch mit dem Generator gekoppelt, sodass Rotationsenergie vom Rotor zum Generator übertragbar ist. Der Generator ist dazu ausgebildet, die Rotationsenergie in elektrische Energie umzuwandeln. Das Gehäuse weist eine erste Seitenwand, eine zweite Seitenwand, eine vordere Öffnung und eine hintere Öffnung auf. Die vordere Öffnung ist zwischen den Seitenwänden angeordnet. Die hintere Öffnung ist ebenfalls zwischen den Seitenwänden angeordnet. Zwischen den Seitenwänden und den Öffnungen ist ein Innenraum angeordnet. Beispielsweise kann der Innenraum durch die Seitenwände und die Öffnungen begrenzt sein. Der Rotor ist durch ein von der vorderen Öffnung zur hinteren Öffnung durch das Gehäuse strömendes Fluid in Rotation versetzbar. Somit kann der Rotor beispielsweise durch eine Wind- oder Wasserströmung in Rotation versetzt werden. Die Rotationsenergie des Rotors kann dann mittels des Generators in elektrische Energie umgewandelt werden, sodass also aus der Wind- oder Wasserströmung elektrische Energie erzeugt wird.

Das Gehäuse umfasst ein Fluidabweisungsmittel, das an der ersten Seitenwand angeordnet ist und in den Innenraum hineinragt. Das Fluidabweisungsmittel beeinflusst die Fluidströmung, sodass die Effizienz der Vorrichtung erhöht wird. Beispielsweise kann das Fluidabweisungsmittel so angeordnet sein, dass die Fluidströmung von Rotorblättern, die sich in Richtung der vorderen Öffnung bewegen, weg geleitet wird, sodass der Strömungswiderstand für diese Rotorblätter verringert wird. Außerdem wird durch das Fluidabweisungsmittel der für die Fluidströmung vorhandene Raum verengt, sodass die Strömungsgeschwindigkeit des Fluids zunimmt.

Nach einer Ausführungsform der Erfindung kann das Fluidabweisungsmittel dazu ausgebildet sein, das durch das Gehäuse strömende Fluid von der ersten Seitenwand in Richtung der zweiten Seitenwand abzuweisen. Hierbei kann es sich insbesondere um die Strömung des Fluids von der vorderen Öffnung zur hinteren Öffnung handeln. Dadurch, dass das Fluid in Richtung der zweiten Seitenwand abgewiesen wird, gibt es in der Nähe der ersten Seitenwand einen Bereich mit einem geringeren Strömungsdruck des Fluids, sodass es einen geringeren Strömungswiderstand für ein sich in diesem Bereich in Richtung der vorderen Öffnung bewegendes Rotorblatt gibt.

Nach einer Ausführungsform der Erfindung kann das Fluidabweisungsmittel zwischen der vorderen Öffnung und dem Rotor angeordnet sein.

Nach einer Ausführungsform der Erfindung kann der Rotor mehrere Rotorblätter aufweisen. Bei der Rotation des Rotors, wenn das, vorzugsweise von der vorderen Öffnung zur hinteren Öffnung, durch das Gehäuse strömende Fluid den Rotor in Rotation versetzt hat, werden die Rotorblätter in einem Abschnitt in Richtung der vorderen Öffnung bewegt. Das Fluidabweisungsmittel kann zwischen der vorderen Öffnung und diesem Abschnitt angeordnet sein. In diesem Fall gibt es einen besonders geringen Strömungswiderstand für die sich in Richtung der vorderen Öffnung bewegenden Rotorblätter.

Nach einer Ausführungsform der Erfindung kann die vordere Öffnung an einem ersten Ende der Seitenwände angeordnet sein. Die hintere Öffnung kann an einem zweiten Ende der Seitenwände angeordnet sein. Das erste Ende der Seitenwände kann jeweils dem zweiten Ende der Seitenwände gegenüber angeordnet sein. Hiermit kann insbesondere gemeint sein, dass das erste Ende der ersten Seitenwand gegenüber dem zweiten Ende der ersten Seitenwand angeordnet ist und dass das erste Ende der zweiten Seitenwand gegenüber dem zweiten Ende der zweiten Seitenwand angeordnet ist.

Nach einer Ausführungsform der Erfindung kann ein Abstand zwischen den Seitenwänden im Bereich der vorderen Öffnung kleiner sein als ein Abstand zwischen den Seitenwänden im Bereich der hinteren Öffnung. Die Seitenwände können also im Bereich der vorderen Öffnung näher aneinander angeordnet sein als im Bereich der hinteren Öffnung. Hierdurch wird die Fluidströmung innerhalb des Gehäuses beeinflusst, wodurch sich die Effizienz der Vorrichtung weiter erhöht.

Nach einer Ausführungsform der Erfindung kann das Gehäuse eine Oberseite und eine Unterseite aufweisen. Die Oberseite und die Unterseite können jeweils die beiden Seitenwände miteinander verbinden und jeweils die vordere Öffnung und die hintere Öffnung begrenzen.

Nach einer Ausführungsform der Erfindung kann der Rotor als Savonius-Rotor ausgebildet sein. Hierunter wird im Rahmen dieser Beschreibung insbesondere verstanden, dass der Rotor mehrere einander überlappende Rotorblätter aufweist, die entlang der, vorzugsweise vertikalen, Drehachse gestreckt zwischen kreisförmigen Endscheiben montiert sind. Die Endscheiben können auch als Rotorteller bezeichnet werden.

Nach einer Ausführungsform der Erfindung kann der Rotor drei, insbesondere genau drei, also nicht weniger und nicht mehr als drei, Rotorblätter aufweisen. Es ist insbesondere möglich, dass die Rotorblätter auf einem geometrischen Kreis und jeweils um 120° zueinander versetzt angeordnet sind. Unter einem geometrischen Kreis wird dabei im Rahmen dieser Beschreibung insbesondere ein Kreis verstanden, der lediglich virtuell aber nicht als Bauteil vorhanden ist.

Nach einer Ausführungsform der Erfindung können die Rotorblätter jeweils einen Querschnitt in Wellenform aufweisen. Beispielsweise können die Rotorblätter jeweils einen äußeren Bereich mit einer ersten Krümmung aufweisen. Die erste Krümmung kann in eine zweite Krümmung in einem mittleren Bereich übergehen. Die zweite Krümmung kann in eine dritte Krümmung in einem inneren Bereich übergehen. Die erste Krümmung kann dabei einen größeren Krümmungsradius als die dritte Krümmung aufweisen. Die zweite Krümmung kann einen größeren Krümmungsradius als die erste Krümmung aufweisen. Eine solche Form der Rotorblätter steigert weiter die Effizienz der Vorrichtung.

Nach einer Ausführungsform der Erfindung kann der Rotor ein erstes Rotorelement und ein zweites Rotorelement umfassen. Das erste Rotorelement kann oberhalb des zweiten Rotorelements angeordnet sein. Es ist insbesondere möglich, dass das erste Rotorelement direkt oberhalb des zweiten Rotorelements angeordnet ist. Dies kann insbesondere bedeuten, dass zwischen dem ersten und dem zweiten Rotorelement ausschließlich eine Kreisscheibe angeordnet ist, an der sowohl das erste als auch das zweite Rotorelemente befestigt ist. Die Rotorelemente können jeweils mehrere Rotorblätter, insbesondere die gleiche Anzahl an Rotorblättern, aufweisen. Die Rotorblätter des ersten Rotorelements können relativ zu den Rotorblättern des zweiten Rotorelement versetzt sein. Hierdurch können bei hohen Rotationsgeschwindigkeiten auftretende Unwuchten des Rotors verringert werden.

Nach einer Ausführungsform der Erfindung können die Rotorblätter des zweiten Rotorelements jeweils unterhalb und mittig zwischen zwei Rotorblättern des ersten Rotorelements angeordnet sein. Wenn beispielsweise die Rotorelemente jeweils drei Rotorblätter aufweisen, können die Rotorblätter des zweiten Rotorelements jeweils um 60° versetzt relativ zu den Rotorblättern des ersten Rotorelements angeordnet sein. Diese Anordnung reduziert bei hohen Rotationsgeschwindigkeiten auftretende Unwuchten des Rotors.

Nach einer Ausführungsform der Erfindung können/kann an nach außen weisenden Oberflächen der Seitenwände und/oder an einer nach außen weisenden Oberfläche der Oberseite photovoltaische Elemente angeordnet sein. Eine nach außen weisende Oberfläche kann dabei insbesondere in Richtung einer Umgebung der Vorrichtung weisen. Unter einem photovoltaischen Element wird im Rahmen dieser Beschreibung insbesondere ein Element verstanden, das dazu ausgebildet ist, Strahlungsenergie, beispielsweise von Licht, in elektrische Energie zu wandeln. Es kann beispielsweise als photovoltaische Zelle bezeichnet werden. Bei dieser Ausführungsform wird die Effizienz weiter gesteigert, da weitere Bauteile zur Erzeugung elektrischer Energie beitragen.

Nach einer Ausführungsform der Erfindung kann die Vorrichtung einen Energiespeicher umfassen. Der Generator und die photovoltaischen Elemente können elektrisch mit dem Energiespeicher verbunden sein. Der Energiespeicher kann dazu ausgebildet sein, vom Generator erzeugte elektrische Energie und von den photovoltaischen Elementen erzeugte elektrische Energie zu speichern. Die Speicherung kann beispielsweise in Form elektrochemischer Energie erfolgen. Der Energiespeicher kann beispielsweise als Akkumulator ausgebildet sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:

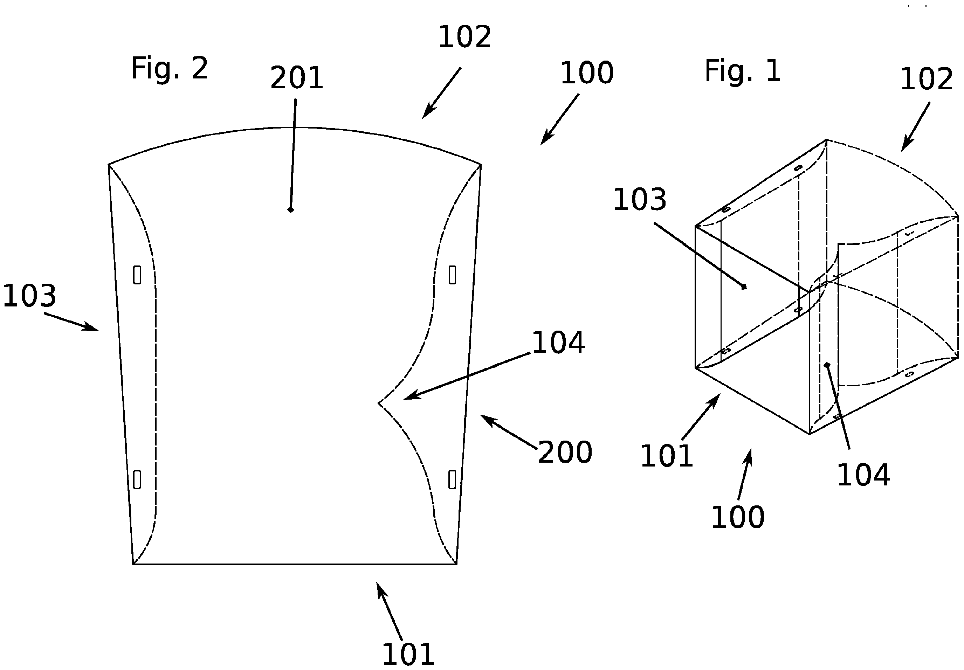

- Fig. 1: eine schematische perspektivische teildurchsichtige Ansicht eines Gehäuses einer Vorrichtung nach einer Ausführungsform der Erfindung;
- Fig. 2: eine schematische Draufsicht auf die Vorrichtung aus Fig. 1;

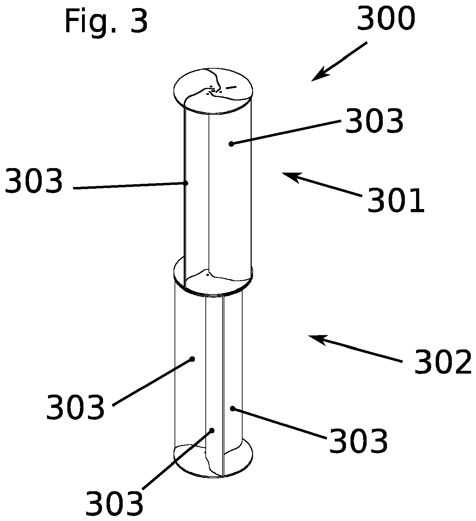

- Fig. 3: eine schematische perspektivische Ansicht eines Rotors einer Vorrichtung nach einer Ausführungsform der Erfindung;

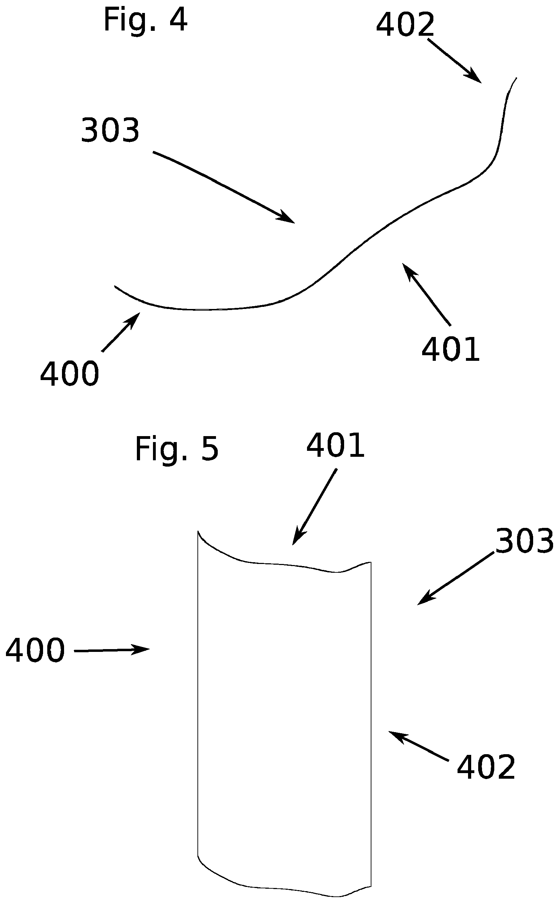

- Fig. 4: eine schematische Draufsicht auf ein Rotorelement des Rotors aus Fig. 3; und
- Fig. 5: eine schematische perspektivische Ansicht des Rotorelements aus Fig. 4

Das Gehäuse 100 weist eine vordere Öffnung 101, eine hintere Öffnung 102, eine erste Seitenwand 200 und eine zweite Seitenwand 103 auf. An der ersten Seitenwand 200 ist ein Fluidabweisungsmittel 104 angeordnet, das von der ersten Seitenwand 200 in Richtung der zweiten Seitenwand 103 ragt. Ein Fluid, beispielsweise Luft oder Wasser, kann von der vorderen Öffnung 101 durch einen Innenraum der Vorrichtung, der durch die Seitenwand 103, das Fluidabweisungsmittel 104, eine Oberseite, eine Unterseite, die vordere Öffnung 101 und die hintere Öffnung 102 begrenzt wird, zur hinteren Öffnung strömen.

Das Fluidabweisungsmittel 104 weist eine Form mit mehreren Krümmungen auf. In einem Bereich, der benachbart zur vorderen Öffnung 101 ist, verringert das Fluidabweisungsmittel 104 eine Querschnittsfläche des Innenraums, sodass das durch den Innenraum strömende Fluid beschleunigt wird. Das Fluidabweisungsmittel 104 weist eine Spitze auf, die benachbart zu diesem Bereich angeordnet ist. Im Bereich der Spitze ist die Querschnittsfläche des Innenraums am geringsten. In einem Bereich zwischen der Spitze und der hinteren Öffnung 102 vergrößert sich die Querschnittsfläche des Innenraums wieder. In diesem Bereich vergrößert sich die Querschnittsfläche des Innenraums kontinuierlich.

Zwischen der Spitze und der hinteren Öffnung 102 kann ein Teil des Rotors 300 angeordnet werden. Der Rotor 300 ist dabei dazu ausgebildet, so zu rotieren, dass die Rotorblätter 303, die zwischen der Spitze und der hinteren Öffnung 102 sind, in Richtung der Spitze rotieren.

Das von der vorderen Öffnung 101 zur hinteren Öffnung 102 strömende Fluid wird vom Fluidabweisungsmittel von der ersten Seitenwand 200 weg in Richtung der zweiten Seitenwand 103 gelenkt. Im Bereich zwischen der Spitze und der hinteren Öffnung 102 ist der Strömungswiderstand für die sich in Richtung der vorderen Öffnung 101 bewegenden Rotorblätter 303 besonders gering. So wird die Effizienz der Vorrichtung erhöht.

Das Gehäuse umfasst außerdem eine Oberseite und eine Unterseite. Die Oberseite und die Unterseite begrenzen jeweils gemeinsam mit den Seitenwänden 200 und 103 die vordere Öffnung 101 und die hintere Öffnung 102. Angrenzend an die hintere Öffnung 102 weisen die Oberseite und die Unterseite jeweils eine Bogenform auf.

Der Rotor 300 weist ein erstes Rotorelement 301 und ein zweites Rotorelement 302 auf. Das erste Rotorelement 301 ist dabei oberhalb des zweiten Rotorelements 302 angeordnet. Jedes der Rotorelemente 301 und 302 weist jeweils drei Rotorblätter 303 auf. Die Rotorblätter 303 des ersten Rotorelements 301 sind dabei gleichmäßig voneinander beabstandet, nämlich um 120° relativ zueinander versetzt. Die Rotorblätter 303 des zweiten Rotorelements 302 sind ebenfalls gleichmäßig voneinander beabstandet, nämlich um 120° relativ zueinander versetzt.

Oberhalb und unterhalb der Rotorelemente 301 und 302 befindet sich jeweils ein Rotorteller, an dem die Rotorblätter 303 befestigt sind. Die Rotorteller sind dabei kreisrund ausgebildet. Auch zwischen den Rotorelementen 301 und 302 ist solch ein Rotorteller angeordnet.

Die Rotorblätter 303 des zweiten Rotorelements 302 sind um 60° versetzt relativ zu den Rotorblättern 303 des ersten Rotorelements 301 angeordnet. So werden Unwuchten, die bei relativ hohen Rotationsgeschwindigkeiten des Rotors 303 entstehen können, verringert.

Die Rotorblätter 303 wiesen einen äußeren Bereich 400 mit einer ersten Krümmung auf. Der äußere Bereich 400 geht in einen mittleren Bereich 401 mit einer zweiten Krümmung über, der wiederum in einen inneren Bereich 402 mit einer dritten Krümmung übergeht. Der äußere Bereich 400 ist dabei weiter von der Rotationsachse des Rotors 300 entfernt als der mittlere Bereich 401. Der mittlere Bereich 401 ist weiter von der Rotationsachse des Rotors 300 entfernt als der innere Bereich 402.

Die zweite Krümmung im mittleren Bereich 401 weist eine größeren Krümmungsradius als die erste und die dritte Krümmung auf. Außerdem ist der mittlere Bereich 401 entgegengesetzt zum inneren Bereich 402 und zum äußeren Bereich 400 gekrümmt. Die erste Krümmung im äußeren Bereich 400 weist einen größeren Krümmungsradius als die dritte Krümmung im inneren Bereich 402 auf. Der innere Bereich 402 und der äußere Bereich 400 sind außerdem in der gleichen Richtung gekrümmt. Diese Form des Rotorelements 303 hat sich in praktischen Versuchen als besonders effizient für die Energieerzeugung in Kombination mit dem Gehäuse 100 erwiesen.

## Patentansprüche

1. Vorrichtung zur Erzeugung elektrischer Energie, umfassend ein Gehäuse (100), einen elektrischen Generator und einen Rotor (300), wobei der Rotor (300) innerhalb des Gehäuses (100) angeordnet ist, wobei der Rotor (300) mechanisch mit dem Generator gekoppelt ist, sodass Rotationsenergie vom Rotor (300) zum Generator übertragbar ist, wobei der Generator dazu ausgebildet ist, die Rotationsenergie in elektrische Energie umzuwandeln, wobei das Gehäuse (100) eine erste Seitenwand (200), eine zweite Seitenwand (103), eine vordere Öffnung (101) und eine hintere Öffnung (102) aufweist, wobei die vordere Öffnung (101) zwischen den Seitenwänden (200; 103) angeordnet ist, wobei die hintere Öffnung (102) zwischen den Seitenwänden (200; 103) angeordnet ist, wobei zwischen den Seitenwänden (200; 103) und den Öffnungen (101; 102) ein Innenraum angeordnet ist, wobei der Rotor (300) durch ein von der vorderen Öffnung (101) zur hinteren Öffnung (102) durch das Gehäuse (100) strömendes Fluid in Rotation versetzbar ist, **dadurch gekennzeichnet, dass** das Gehäuse (100) ein Fluidabweisungsmittel (104) umfasst, das an der ersten Seitenwand (200) angeordnet ist und in den Innenraum hineinragt.

2. Vorrichtung nach dem vorherigen Anspruch, **dadurch gekennzeichnet, dass** das Fluidabweisungsmittel (104) dazu ausgebildet ist, das durch das Gehäuse (100) strömende Fluid in Richtung der zweiten Seitenwand (103) abzuweisen.

3. Vorrichtung nach einem der vorherigen Ansprüche, **dadurch gekennzeichnet, dass** das Fluidabweisungsmittel (104) zwischen der vorderen Öffnung (101) und dem Rotor (300) angeordnet ist.

4. Vorrichtung nach einem der vorherigen Ansprüche, **dadurch gekennzeichnet, dass** der Rotor (300) mehrere Rotorblätter (303) aufweist, wobei bei der Rotation des Rotors (300), wenn das durch das durch das Gehäuse (100) strömende Fluid den Rotor (300) in Rotation versetzt hat, die Rotorblätter (303) in einem Abschnitt in Richtung der vorderen Öffnung (101) bewegt werden, und wobei das Fluidabweisungsmittel (104) zwischen der vorderen Öffnung (101) und dem Abschnitt angeordnet ist.

5. Vorrichtung nach einem der vorherigen Ansprüche, **dadurch gekennzeichnet, dass** die vordere Öffnung (101) an einem ersten Ende der Seitenwände (103; 200) angeordnet ist, wobei die hintere Öffnung (102) an einem zweiten Ende der Seitenwände (103; 200) angeordnet ist, und wobei das erste Ende der Seitenwände (103; 200) jeweils dem zweiten Ende der Seitenwände (103; 200) gegenüber angeordnet ist.

6. Vorrichtung nach einem der vorherigen Ansprüche, **dadurch gekennzeichnet, dass** ein Abstand zwischen den Seitenwänden (103; 200) im Bereich der vorderen Öffnung (101) kleiner ist als ein Abstand zwischen den Seitenwänden (103; 200) im Bereich der hinteren Öffnung (102).

7. Vorrichtung nach einem der vorherigen Ansprüche, **dadurch gekennzeichnet, dass** das Gehäuse (100) eine Oberseite und eine Unterseite aufweist, wobei die Oberseite und die Unterseite jeweils die beiden Seitenwände (103; 200) miteinander verbinden und jeweils die vordere Öffnung (101) und die hintere Öffnung (102) begrenzen.

8. Vorrichtung nach einem der vorherigen Ansprüche, **dadurch gekennzeichnet, dass** der Rotor als Savonius-Rotor ausgebildet ist.

9. Vorrichtung nach einem der vorherigen Ansprüche, **dadurch gekennzeichnet, dass** der Rotor (300) drei, insbesondere genau drei, Rotorblätter (303) aufweist.

10. Vorrichtung nach einem der vorherigen Ansprüche, **dadurch gekennzeichnet, dass** die Rotorblätter (303) jeweils einen Querschnitt in Wellenform aufweisen.

11. Vorrichtung nach einem der vorherigen Ansprüche, **dadurch gekennzeichnet, dass** der Rotor (300) ein erstes Rotorelement (301) und ein zweites Rotorelement (302) umfasst, wobei das erste Rotorelement (301) oberhalb des zweiten Rotorelements (302) angeordnet ist, wobei die Rotorelemente (301; 302) jeweils mehrere Rotorblätter (303) aufweisen, wobei die Rotorblätter (303) des ersten Rotorelements (301) relativ zu den Rotorblättern (303) des zweiten Rotorelements (302) versetzt sind.

12. Vorrichtung nach dem vorherigen Anspruch, **dadurch gekennzeichnet, dass** die Rotorblätter (303) des zweiten Rotorelements (302) jeweils unterhalb und mittig zwischen zwei Rotorblättern (303) des ersten Rotorelements (301) angeordnet sind.

13. Vorrichtung nach einem der vorherigen Ansprüche, **dadurch gekennzeichnet, dass** an nach außen weisenden Oberflächen der Seitenwände und/oder an einer nach außen weisenden Oberfläche der Oberseite photovoltaische Elemente angeordnet sind.

14. Vorrichtung nach dem vorherigen Anspruch, **dadurch gekennzeichnet, dass** die Vorrichtung einen Energiespeicher umfasst, wobei der Generator und die photovoltaischen Elemente elektrisch mit dem Energiespeicher verbunden sind, wobei der Energiespeicher dazu ausgebildet ist, vom Generator erzeugte elektrische Energie und von den photovoltaischen Elementen erzeugte elektrische Energie zu speichern.
